# DEMANDE DE BREVET EUROPEEN

(11) **EP 1 246 472 A1**
(43) Date de publication de la demande: **02.10.2002**
(21) Numéro de dépôt: 02076138.3
(22) Date de dépôt: 19.03.2002
(51) Int. Cl.: H04N 9/04, H04N 9/64

(54) **Appareil de prise de vue et procédé pour corriger des images prises par un tel appareil**

(30) Priorité: 27.03.2001 FR 0104108
(71) Demandeur: Koninklijke Philips Electronics N.V., 5621 BA Eindhoven (NL)
(72) Inventeur: Bompard, Frédéric, 75008 Paris (FR)
(74) Mandataire: Chaffraix, Jean

(57) **Abrégé**

Cet appareil de prise de vue est formé d'un capteur (3) d'éléments sensibles à la lumière arrangés en matrice, d'au moins un premier organe de filtrage (10) pour traiter les signaux issus desdits éléments sensibles. L'organe de filtrage (10) comporte une pluralité de filtres linéaires (Fmd1, Fmd2, Fdg1,...Fdg6), correspondant à des médianes et des diagonales considérées sur le capteur, pour fournir une pluralité d'indications de filtrage. On a prévu un organe d'élimination (14) pour éliminer les résultats extrêmes de ces indications et un organe d'estimation (16) pour fournir une indication valide à partir des indications non éliminées. Ainsi, les éléments sensibles défaillants du capteur (3) ne dégradent pas trop les images fournies par cet appareil.

## Description

L'invention concerne un appareil de prise de vue formé d'un capteur composé d'éléments sensibles à la lumière arrangés en matrice, d'au moins un premier organe de filtrage pour traiter les signaux issus desdits éléments sensibles.

L'invention concerne aussi un procédé pour traiter des images prises par un tel appareil.

Un problème qui se pose avec ce genre d'appareil est qu'il est difficile d'obtenir un capteur exempt de défauts. Ces capteurs sont formés par une pluralité d'éléments sensibles au rayonnement visible, disposés en matrice. Différentes couches de filtres de couleur déposées sur eux permet de les rendre sensibles, sélectivement, à différentes composantes du spectre visible, par exemple aux couleurs jaune rouge et bleu. C'est lors du processus de fabrication que surviennent les défauts. Ces défauts peuvent rentrer dans différentes catégories :
- Une première catégorie de défaut est un défaut ponctuel se produisant sur un seul point du capteur.
- Une deuxième catégorie est un défaut de groupe impliquant plusieurs points adjacents de la mosaïque. Cette deuxième catégorie de défaut provient du processus de moulage.
- Une troisième catégorie est un défaut de couleur impliquant plusieurs points de la même couleur. Cette catégorie se produit lors du processus de mise en place de filtres de couleur.
- Une quatrième catégorie est un défaut de colonnes impliquant plusieurs points du capteur situés sur une même colonne.

Dans le document de brevet japonais JP 11-262025, on décrit un appareil du genre précité dans le préambule. Selon ce document les défauts sont corrigés couleur par couleur en utilisant une table préalablement remplie contenant les positions exactes des pixels défectueux.

La présente invention propose un appareil du genre mentionné dans le préambule qui aborde la correction des défauts selon une autre approche et qui supprime ou atténue dans une large mesure les effets des défauts dus aux points défaillants du capteur, notamment ceux décrits par les catégories précitées.

Pour cela, un tel appareil est remarquable en ce que l'organe de filtrage comporte une pluralité de filtres linéaires correspondant à des directions considérées sur le capteur pour fournir une pluralité d'indications de filtrage, un organe d'élimination pour éliminer les résultats extrêmes de différents filtres linéaires et un organe d'estimation pour fournir une indication à partir des filtres non éliminés.

Un procédé pour traiter les images prises par un appareil du genre mentionné dans le préambule est remarquable en ce qu'il comporte les étapes suivantes :
- filtrage matriciel de l'image pour chacun de ses points selon une pluralité de directions,
- estimation de la valeur de filtrage pour chacune de ces directions,
- élimination des valeurs extrêmes de filtrage,
- estimation de la valeur à donner au point courant de l'image en effectuant une combinaison de moyenne des valeurs de filtrage non éliminées.

L'idée de l'invention consiste donc à utiliser la luminance et donc toutes les informations provenant de tous les points du capteur.

La description suivante, faite en regard des dessins ci-annexés, le tout donné à titre d'exemples non limitatifs fera bien comprendre comment l'invention peut être réalisée. Sur les dessins :
La figure 1 montre un schéma de l'appareil conforme à l'invention.
La figure 2 montre l'organisation du capteur.

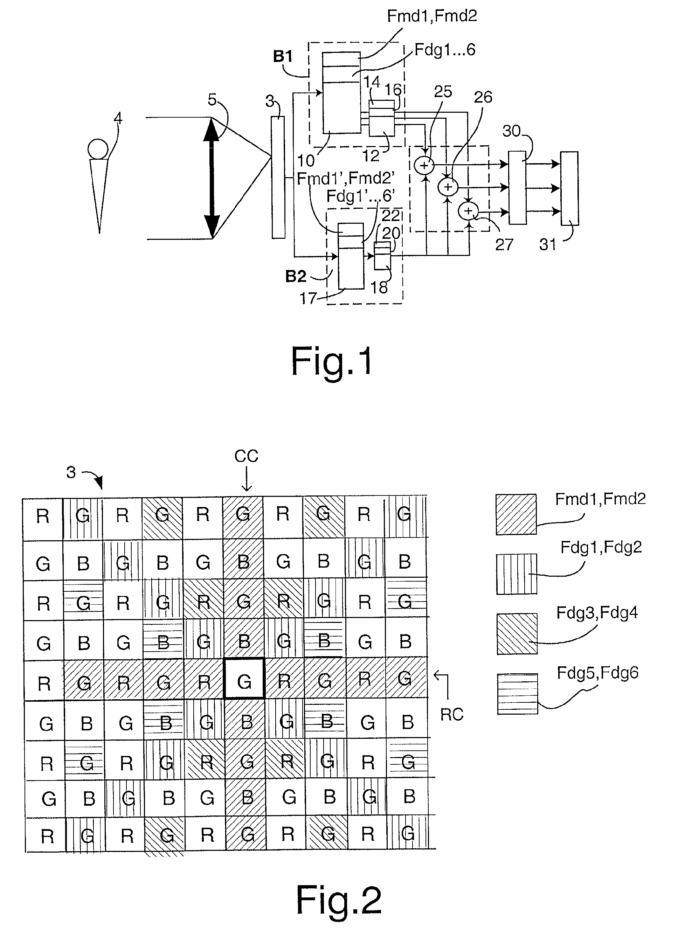

A la figure 1, on a représenté un appareil de prise de vue conforme à l'invention. La référence 3 indique le capteur comportant une pluralité d'éléments sensibles à différentes composantes, arrangés en matrice. Sur ce capteur vient se focaliser le sujet 4, ce qui est obtenu par un objectif 5. L'appareil de prise de vue comporte un premier organe de filtrage 10 effectuant différentes opérations de filtrage.

A la sortie de ce capteur, il est possible de recueillir différents signaux correspondant à chacune desdites composantes de couleur. Ces différentes composantes de couleur subissent une opération de filtrage effectuée par le premier organe de filtrage 10 (figure 1) faisant partie d'une première branche B1. Cette opération consiste en un filtrage à deux dimensions 2D.

Selon l'invention cet organe de filtrage 10 comporte une pluralité de filtres linéaires Fmd1, Fmd2 Fdg1 à Fdg6 correspondant à des directions considérées sur le capteur pour fournir une pluralité d'indications de filtrage. Ces directions sont des médianes et différentes diagonales. Ces différents filtres linéaires fournissent différentes informations relatives à un point d'image. Un organe de sortie de branche 12 comporte un organe d'élimination 14 prévu pour éliminer les résultats extrêmes de différents filtres linéaires et un organe d'estimation 16 pour fournir une indication à partir des filtres non éliminés.

Selon un autre mode de réalisation, l'appareil est formé de deux branches de traitement : une première branche B1 qui est relative au traitement lié à la couleur pour lequel les éléments ont été sensibilisés et qui comporte les éléments précités, et une deuxième branche B2 qui est relative au traitement sans considération de couleur. Cette deuxième branche a pour but de fournir plus de détails sur limage, puisque celle-ci traite la partie haute du spectre de l'image sans tenir compte de la couleur sachant que l'oeil est plus sensible aux transitions de la luminance qu'aux transitions de couleur. Dans cette branche B2, on retrouve un organe de filtrage 17 comportant des filtres Fmd1', Fmd2', Fdg1' à Fdg6' qui opèrent d'une manière semblable aux filtres de l'organe 10, mais ils sont adaptés aux exigences du traitement de la branche B2. Ce qui se dira sur les filtres Fmd1, Fmd2, Fdg1 à Fdg6 en ce qui concerne la correction, s'appliquera aux filtres Fmd1', Fmd2', Fdg1' à Fdg6'. On retrouve aussi un organe de sortie 18 comportant un organe d'élimination 20 qui est prévu, lui aussi, pour éliminer les résultats extrêmes de différents filtres linéaires et un organe d'estimation 22 pour fournir une indication à partir des filtres non éliminés.

Les informations fournies par ces deux branches sont simplement additionnées au moyen d'additionneurs 25, 26 et 27 qui additionnent respectivement les valeurs relatives aux composantes de couleur traitées par la branche B1 avec l'information de luminance fournie par la branche B2. Un dispositif d'interfaçage 30 permet de traiter ces signaux additionnés en vue de les stocker dans une mémoire d'image 31.

La figure 2 explicite les directions des filtres. Sur cette figure on a montré la disposition des différents éléments du capteur avec leur sensibilité aux trois couleurs primaires : - le bleu, ces éléments sont indiqués par la lettre « B » sur la figure 2
- le rouge, ces éléments sont indiqués par la lettre « R » sur la figure 2
- le vert, ces éléments sont indiqués par la lettre « G » sur cette même figure 2.

Les différents filtres opèrent selon 8 directions, ceci étant représenté par différents motifs de hachures.
- Les filtres Fmd1 et Fmd2 sont des filtres qui opèrent respectivement sur les médianes horizontale et verticale.
- Les filtres Fdg1 et Fdg2, opèrent sur les diagonales principales à 45° par rapport aux directions des filtres Fmd1 et Fmd2.
- Les filtres Fdg3 et Fdg4 opèrent sur des diagonales à 22,5° par rapport à la médiane verticale.
- Les filtres Fdg5 et Fdg6 opèrent sur des diagonales à 22,5° par rapport à la médiane horizontale.

Ces filtres sont réalisés, par exemple, à partir d'une matrice carrée de 9 × 9 coefficients centrée sur le point d'image à traiter.

Le fonctionnement de l'invention est le suivant.

Les différents signaux de sortie des filtres précités sont conçus pour estimer la valeur du pixel central placé sur la colonne CC et la rangée RC. Les grandeurs de ces différents signaux de sortie sont classées. Les valeurs extrêmes sont éliminées. La valeur du pixel est alors le résultat de la moyenne des autres signaux de sortie. Les valeurs extrêmes, éliminées, peuvent être considérées comme étant dues à un défaut du capteur.

## Revendications

1. Appareil de prise de vue formé d'un capteur composé d'éléments sensibles à la lumière arrangés en matrice, d'au moins un premier organe de filtrage pour traiter les signaux issus desdits éléments sensibles, **caractérisé en ce que** l'organe de filtrage comporte une pluralité de filtres linéaires correspondant à des directions considérées sur le capteur pour fournir une pluralité d'indications de filtrage, un organe d'élimination pour éliminer les résultats extrêmes de différents filtres linéaires et un organe d'estimation pour fournir une indication à partir des filtres non éliminés.

2. Appareil de prise de vue selon la revendication 1 comprenant une première branche pour filtrer les informations de couleur et une deuxième branche pour filtrer des informations de luminance de la partie haute du spectre d'image, **caractérisé en ce que** la pluralité de filtres est placée dans la première branche.

3. Appareil de prise de vue selon la revendication 1 ou 2 comprenant une première branche pour filtrer les informations de couleur et une deuxième branche pour filtrer des informations de luminance de la partie haute du spectre d'image, **caractérisé en ce que** la pluralité de filtres est placée dans la deuxième branche.

4. Appareil de prise de vue selon l'une des revendications 1 à 3, **caractérisé en ce que** l'organe d'élimination élimine les valeurs extrêmes maximale ou minimale des signaux de sortie desdits filtres.

5. Appareil de prise de vue selon l'une des revendications 1 à 4, **caractérisé en ce que** l'organe d'estimation effectue une moyenne des signaux de sortie des filtres non éliminés.

6. Procédé de prise de vue, **caractérisé en ce qu'**il comporte les étapes suivantes :
- filtrage matriciel de l'image pour chacun de ses points selon une pluralité de directions,
- estimation de la valeur de filtrage pour chacune de ces directions,
- élimination des valeurs extrêmes de filtrage,
- estimation de la valeur à donner au point courant de l'image en effectuant une combinaison de moyenne des valeurs de filtrage non éliminées.
